# EUROPEAN PATENT APPLICATION

(11) **EP 2 963 915 A1**
(43) Date of publication of application: **06.01.2016**
(21) Application number: 14878164.4
(22) Date of filing: 10.01.2014
(51) Int. Cl.: H04N 5/232, H04W 88/02

(54) **INFORMATION PROCESSING METHOD FOR TERMINAL AND TERMINAL**

(71) Applicant: Huawei Technologies Co., Ltd., Longgang District Shenzhen, Guangdong 518129 (CN)
(72) Inventor: XIA, Zhaojie, Shenzhen Guangdong 518129 (CN); ZHONG, Shan, Shenzhen Guangdong 518129 (CN); LIAO, Zhiqing, Shenzhen Guangdong 518129 (CN); XU, Lifu, Shenzhen Guangdong 518129 (CN)
(74) Representative: Goddar, Heinz J.
(86) International application number: PCT/CN2014/070485
(87) International publication number: WO 2015/103778

(57) **Abstract**

Embodiments of the present invention provide an information processing method applied to a terminal, where the method includes: acquiring existing photographing status information; generating notification information according to the existing photographing status information; outputting the notification information, so that a user adjusts a photographing status of the terminal according to the notification information. In addition, the embodiments of the present invention further provide a terminal. The method and the terminal can help a user acquire a better photographing result.

## Description

### TECHNICAL FIELD

Embodiments of the present invention relate to the field of photographing technologies, and in particular, to an information processing method applied to a terminal and a terminal.

### BACKGROUND

Currently, a terminal, such as a mobile phone or a tablet computer, generally has a camera or another photographing apparatus. A user acquires a photo of scenery or people by using these terminals with a photographing apparatus, and stores the photo or shares the photo with others.

Sometimes, the user hopes to photograph a same object at different time to analyze a change in the object. For example, a photographer needs to separately photograph a mountain in spring and winter, so as to observe a change in scenery of the mountain between the spring and the winter. For ease and accuracy of comparison, the photographer needs to photograph the mountain with same or similar composition. The composition herein may include parameters, such as an angle and a size. An interval between two times of photographing is relatively long, so it is difficult to ensure that photos obtained during the two times of photographing have the same or similar composition. Even if the photographer has a photo of the mountain photographed in the spring, the photographer also needs to make multiple attempts to acquire a new photo that has the same or similar composition as the existing photo. Efficiency of this manner in which the attempt is made according to memory or a photo is very low.

In addition, most users are not professional photographers. When a user arrives at a place once appeared in a photo, he or she may extremely want to take a new photo that is the same as or similar to the photo. However, currently, there is no related technology that can instruct an unprofessional person on site to take a photo.

### SUMMARY

Embodiments of the present invention provide an information processing method applied to a terminal, and a terminal, so as to help a user to acquire a better photographing result. According to a first aspect of the present invention, an information processing method applied to a terminal is provided, where the method includes:
acquiring existing photographing status information;
generating notification information according to the existing photographing status information; and
outputting the notification information, so that a user adjusts a photographing status of the terminal according to the notification information.

In a first possible implementation manner of the first aspect, the notification information includes: the existing photographing status information.

In a second possible implementation manner of the first aspect, before the generating notification information, the method further includes: acquiring current photographing status information; and
the generating notification information according to the existing photographing status information includes: generating the notification information according to the existing photographing status information and the current photographing status information, where the notification information includes a deviation between the current photographing status information and the existing photographing status information.

With reference to the foregoing first aspect or the first possible implementation manner or the second possible implementation manner of the first aspect, in a third possible implementation manner, the photographing status information includes at least one of photographing status information of the terminal and additional status information.

With reference to the third possible implementation manner of the first aspect, in a fourth possible implementation manner, the photographing status information of the terminal includes at least one of a location parameter and an angle parameter.

With reference to the fourth possible implementation manner of the first aspect, in a fifth possible implementation manner, the photographing status information of the terminal further includes at least one of a height parameter and a focal length parameter.

With reference to any one implementation manner of the third possible implementation manner to the fifth possible implementation manner of the first aspect, in a sixth possible implementation manner, the additional status information includes at least one of photographing time information and weather information.

With reference to the foregoing first aspect or any one implementation manner of the first possible implementation manner to the sixth possible implementation manner of the first aspect, in a seventh possible implementation manner, before the acquiring existing photographing status information, the method further includes receiving a selection of the user; and
the acquiring existing photographing status information includes: acquiring the
existing photographing status information according to the selection of the user.

With reference to any one implementation manner of the fourth possible implementation manner to the sixth possible implementation manner of the first aspect, in an eighth possible implementation manner of the first aspect, before the acquiring existing photographing status information, the method further includes: acquiring a location parameter of a current location of the terminal ; and
the acquiring existing photographing status information includes: acquiring the existing photographing status information according to the location parameter of the current location.

With reference to the eighth possible implementation manner of the first aspect, in a ninth possible implementation manner, before the acquiring existing photographing status information, the method further includes: acquiring a first location parameter according to first photographing status information that is already stored, where the first photographing status information includes the first location parameter; and the acquiring the existing photographing status information according to the location parameter of the current location includes:
calculating a distance from the current location to a first location according to the location parameter of the current location and the first location parameter; and using the first photographing status information as the existing photographing status information when the distance is less than a preset threshold.

With reference to the eighth possible implementation manner of the first aspect, in a tenth possible implementation manner, before the acquiring existing photographing status information, the method further includes: acquiring a first location parameter and a second location parameter according to first photographing status information and second photographing status information that are already stored, where the first photographing status information and the second photographing status information include the first location parameter and the second location parameter respectively; and
the acquiring the existing photographing status information according to the location parameter of the current location includes:
calculating a first distance from the current location to a first location according to the location parameter of the current location and the first location parameter;
calculating a second distance from the current location to a second location according to the location parameter of the current location and the second location parameter; and
using photographing status information corresponding to a smaller one of the first distance and the second distance as the existing photographing status information.

With reference to the eighth possible implementation manner of the first aspect, in an eleventh possible implementation manner, before the acquiring existing photographing status information, the method further includes: acquiring a first location parameter according to first photographing status information that is already stored, where the first photographing status information includes the first location parameter; and
the acquiring the existing photographing status information according to the location parameter of the current location includes:
calculating a distance from the current location to a first location according to the location parameter of the current location and the first location parameter;
acquiring the first photographing status information with the distance less than a preset threshold; and
according to a selection of the user, using the first photographing status information, with the distance less than the preset threshold and selected by the user, as the existing photographing status information.

With reference to the foregoing first aspect or any one implementation manner of the first possible implementation manner to the sixth possible implementation manner of the first aspect, in a twelfth possible implementation manner, the existing photographing status information is received from another device.

With reference to the foregoing first aspect or any one implementation manner of the first possible implementation manner to the twelfth possible implementation manner of the first aspect, in a thirteenth possible implementation manner, the existing photographing status information is in an image; or
the existing photographing status information is located in a file associated with an image.

With reference to any one implementation manner of the second possible implementation manner to the thirteenth possible implementation manner of the first aspect, in a fourteenth possible implementation manner,
the outputting the notification information includes:
displaying the existing photographing status information and the current photographing status information; and
prompting, by using the acquired existing photographing status information as a reference, the user to adjust the current photographing status information to approximate the existing photographing status information up to another preset threshold.

According to a second aspect of the present invention, an information processing apparatus applied to a terminal is provided, where the apparatus includes:
an existing information acquiring module, configured to acquire existing photographing status information;
a generating module, configured to generate notification information according to the existing photographing status information; and
an output module, configured to output the notification information, so that a user adjusts a photographing status of the terminal according to the notification information.

In a first possible implementation manner of the second aspect, the notification information includes the existing photographing status information.

In a second possible implementation manner of the second aspect, before the notification information is generated, the apparatus further includes: a current information acquiring module; and the current information acquiring module is configured to: acquire current photographing status information before the notification information is generated; and
the generating module is specifically configured to: generate the notification information according to the existing photographing status information and the current photographing status information, where the notification information includes a deviation between the current photographing status information and the existing photographing status information.

With reference to the foregoing second aspect or the first possible implementation manner or the second possible implementation manner of the second aspect, in a third possible implementation manner, the photographing status information includes at least one of photographing status information of the terminal and additional status information.

With reference to the third possible implementation manner of the second aspect, in a fourth possible implementation manner, the photographing status information of the terminal includes at least one of a location parameter and an angle parameter.

With reference to the fourth possible implementation manner of the second aspect, in a fifth possible implementation manner, the photographing status information of the terminal further includes at least one of a height parameter and a focal length parameter.

With reference to any one implementation manner of the third possible implementation manner to the fifth possible implementation manner of the second aspect, in a sixth possible implementation manner, the additional status information includes at least one of photographing time information and weather information.

With reference to the foregoing second aspect or any one implementation manner of the first possible implementation manner to the sixth possible implementation manner of the second aspect, in a seventh possible implementation manner, the apparatus further includes a selecting module, configured to receive a selection of the user before the existing photographing status information is acquired; and
the existing information acquiring module is specifically configured to acquire the existing photographing status information according to the selection of the user received by the selecting module.

With reference to any one implementation manner of the fourth possible implementation manner to the sixth possible implementation manner of the second aspect, in an eighth possible implementation manner, the apparatus further includes: a current location acquiring module, configured to acquire a location parameter of a current location of the terminal before the existing photographing status information is acquired; and
the existing information acquiring module is specifically configured to acquire the existing photographing status information according to the location parameter that is of the current location and acquired by the location acquiring module.

With reference to the eighth possible implementation manner of the second aspect, in a ninth possible implementation manner, the apparatus further includes an existing location parameter acquiring module, configured to, before the existing photographing status information is acquired, acquire a first location parameter according to first photographing status information that is already stored, where the first photographing status information includes the first location parameter; and
the existing information acquiring module specifically includes a calculating module and a determining module;
the calculating module is configured to calculate a distance from the current location to a first location according to the location parameter of the current location and the first location parameter; and
the determining module is configured to use the first photographing status information as the existing photographing status information when the distance is less than a preset threshold.

With reference to the eighth possible implementation manner of the second aspect, in a tenth possible implementation manner, the apparatus further includes an existing location parameter acquiring module, configured to, before the existing photographing status information is acquired, acquire a first location parameter and a second location parameter according to first photographing status information and second photographing status information that are already stored, where the first photographing status information and the second photographing status information include the first location parameter and the second location parameter respectively; and
the existing information acquiring module specifically includes a calculating module and a determining module;
the calculating module is configured to calculate: a first distance from the current location to a first location according to the location parameter of the current location and the first location parameter, and a second distance from the current location to a second location according to the location parameter of the current location and the second location parameter; and
the determining module is configured to use photographing status information corresponding to a smaller one of the first distance and the second distance as the existing photographing status information.

With reference to the eighth possible implementation manner of the second aspect, in an eleventh possible implementation manner, the apparatus further includes an existing location parameter acquiring module, configured to, before the existing photographing status information is acquired, acquire a first location parameter according to first photographing status information that is already stored, where the first photographing status information includes the first location parameter; and
the existing information acquiring module specifically includes a calculating module, a first acquiring module and a determining module;
the calculating module is configured to calculate a distance from the current location to a first location according to the location parameter of the current location and the first location parameter;
the first acquiring module is configured to acquire the first photographing status information with the distance less than a preset threshold; and
the determining module is configured to, according to a selection of the user, use the first photographing status information, with the distance less than the preset threshold and selected by the user, as the existing photographing status information.

With reference to the foregoing second aspect or any one implementation manner of the first possible implementation manner to the sixth possible implementation manner of the second aspect, in a twelfth possible implementation manner, the existing photographing status information is received from another device.

With reference to the foregoing second aspect or any one implementation manner of the first possible implementation manner to the twelfth possible implementation manner of the second aspect, in a thirteenth possible implementation manner, the existing photographing status information is in an image; or
the existing photographing status information is located in a file associated with an image.

With reference to any one implementation manner of the second possible implementation manner to the thirteenth possible implementation manner of the second aspect, in a fourteenth possible implementation manner,
the output module specifically includes: a display module and a prompting module;
the display module is configured to display the existing photographing status information and the current photographing status information; and
the prompting module is configured to prompt, by using the acquired existing photographing status information as a reference, the user to adjust the current photographing status information to approximate the existing photographing status information up to another preset threshold.

According to a third aspect, a terminal is provided, where the terminal includes:
an input device and an output device;
at least one processor; and
a memory, where the memory is coupled with the processor;
the processor is configured to:
   acquire existing photographing status information;
   generate notification information according to the existing photographing status information; and
   output the notification information; and
   the output device is configured to present the notification information, so that a user adjusts a photographing status of the terminal according to the notification information.

In a first possible implementation manner of the third aspect, the notification information includes the existing photographing status information.

In a second possible implementation manner of the third aspect, the terminal further includes a parameter collecting device, configured to collect current photographing status information; and
the generating notification information according to the existing photographing status information includes: generating the notification information according to the existing photographing status information and the current photographing status information, where the notification information includes a deviation between the current photographing status information and the existing photographing status information.

With reference to the foregoing third aspect or the first possible implementation manner or the second possible implementation manner of the third aspect, in a third possible implementation manner, the photographing status information includes at least one of photographing status information of the terminal and additional status information.

With reference to the third possible implementation manner of the third aspect, in a fourth possible implementation manner, the photographing status information of the terminal includes at least one of a location parameter and an angle parameter.

With reference to the fourth possible implementation manner of the third aspect, in a fifth possible implementation manner, the photographing status information of the terminal further includes at least one of a height parameter and a focal length parameter.

With reference to any one implementation manner of the third possible implementation manner to the fifth possible implementation manner of the third aspect, in a sixth possible implementation manner, the additional status information includes at least one of photographing time information and weather information.

With reference to the foregoing third aspect or any one implementation manner of the first possible implementation manner to the sixth possible implementation manner of the third aspect, in a seventh possible implementation manner, the input device is configured to receive a selection of the user; and
the acquiring existing photographing status information includes: acquiring the existing photographing status information according to the selection of the user.

With reference to any one implementation manner of the fourth possible implementation manner to the sixth possible implementation manner of the third aspect, in an eighth possible implementation manner, the parameter collecting device is specifically configured to collect a location parameter of a current location of the terminal; and
the acquiring existing photographing status information includes: acquiring the existing photographing status information according to the location parameter of the current location.

With reference to the eighth possible implementation manner of the third aspect, in a ninth possible implementation manner, the processor is further configured to: acquire a first location parameter according to first photographing status information that is already stored, where the first photographing status information includes the first location parameter; and
the acquiring the existing photographing status information according to the location parameter of the current location includes:
calculating a distance from the current location to a first location according to the location parameter of the current location and the first location parameter; and using the first photographing status information as the existing photographing status information when the distance is less than a preset threshold.

With reference to the eighth possible implementation manner of the third aspect, in a tenth possible implementation manner, the processor is further configured to: acquire a first location parameter and a second location parameter according to first photographing status information and second photographing status information that are already stored, where the first photographing status information and the second photographing status information include the first location parameter and the second location parameter respectively; and
the acquiring the existing photographing status information according to the location parameter of the current location includes:
calculating a first distance from the current location to a first location according to the location parameter of the current location and the first location parameter;
calculating a second distance from the current location to a second location according to the location parameter of the current location and the second location parameter; and
using photographing status information corresponding to a smaller one of the first distance and the second distance as the existing photographing status information.

With reference to the eighth possible implementation manner of the third aspect, in an eleventh possible implementation manner, the processor is further configured to: acquire a first location parameter according to first photographing status information that is already stored, where the first photographing status information includes the first location parameter; and
the acquiring the existing photographing status information according to the location parameter of the current location includes:
calculating a distance from the current location to a first location according to the location parameter of the current location and the first location parameter;
acquiring the first photographing status information with the distance less than a preset threshold; and
according to a selection of the user, using the first photographing status information, with the distance less than the preset threshold and selected by the user, as the existing photographing status information; where the input device is configured to receive the selection of the user.

With reference to the foregoing third aspect or any one implementation manner of the first possible implementation manner to the sixth possible implementation manner of the third aspect, in a twelfth possible implementation manner, the existing photographing status information is received from another device.

With reference to the foregoing third aspect or any one implementation manner of the first possible implementation manner to the twelfth possible implementation manner of the third aspect, in a thirteenth possible implementation manner, the existing photographing status information is in an image; or
the existing photographing status information is located in a file associated with an image.

With reference to any one implementation manner of the second possible implementation manner to the thirteenth possible implementation manner of the third aspect, in a fourteenth possible implementation manner,
the output device includes a display screen, where
the presenting, by the output device, the notification information includes:
displaying the existing photographing status information and the current photographing status information by using the display screen; and prompting, by using the acquired existing photographing status information as a reference, the user to adjust the current photographing status information to approximate the existing photographing status information up to another preset threshold.

It may be learned from the foregoing technical solutions of the embodiments of the present invention, before a user photographs a photographed object by using a terminal, the terminal first acquires existing photographing status information, then generates notification information according to the acquired existing photographing status information, and finally outputs the generated notification information. In this way, the user can adjust a photographing status according to the notification information. Therefore, because the user can obtain the notification information output by the terminal, the notification information can help the user acquire a better photographing result.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a part of a terminal according to an embodiment of the present invention;
FIG. 2 is a flowchart of an information processing method applied to a terminal according to an embodiment of the present invention;
FIG. 3 is a flowchart of another information processing method applied to a terminal according to an embodiment of the present invention;
FIG. 4 is a schematic diagram of three rotation angles of a terminal;
FIG. 5 is a schematic diagram of displaying on a display interface after notification information is output by a terminal;
FIG. 6 is a schematic diagram of adjusting three rotation angles which are on the display screen according to FIG. 5;
FIG. 7 is a flowchart of photographing by a terminal according to an embodiment of the present invention; and
FIG. 8 is another schematic structural diagram of a terminal according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention shall fall within the protection scope of the present invention.

A terminal in the embodiments of the present invention may include a mobile phone, a tablet computer, a camera, a camcorder, or another apparatus capable of photographing.

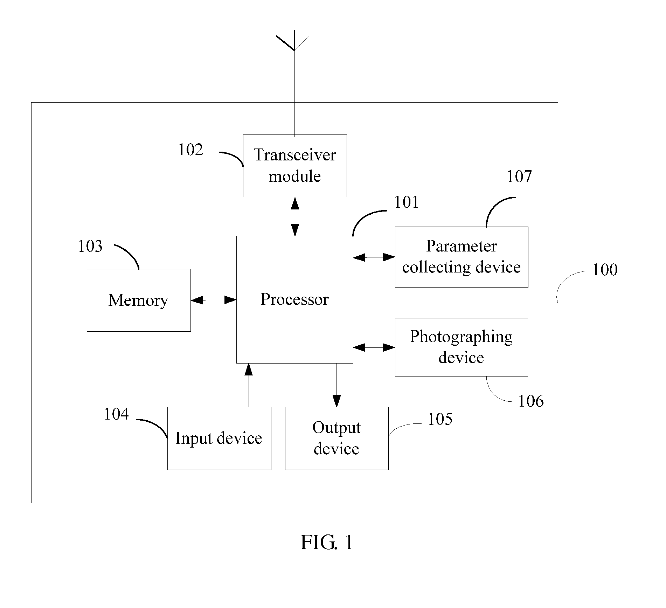

FIG. 1 shows a schematic structural diagram of a part of a terminal 100 according to an embodiment of the present invention.

Referring to FIG. 1, the terminal 100 may include a processor 101, a transceiver module 102, a memory 103, an input device 104, an output device 105, a photographing device 106, and a parameter collecting device 106.

The processor 101 is a control center of the terminal 100. The processor 101 is connected to all parts of the whole terminal by using various interfaces and lines. By running or executing a software program and/or module stored in the memory 103 and invoking data stored in the memory 103, the processor 101 may perform various functions of the terminal 100, so as to monitor the terminal as a whole.

The transceiver module 102 may be configured to receive and transmit information or data, for example, receive information transmitted from a server. Using a mobile phone as an example, the transceiver module 102 may communicate with a network side and/or another terminal by using wireless communications technologies. Any communications standard or protocol, including but not limited to GSM (Global System of Mobile communication, Global System of Mobile Communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), email, SMS (Short Messaging Service, short messaging service), and the like, may be used in wireless communication.

The memory 103 may be configured to store the software program or related data. The processor 101 runs the software program and the data stored in the memory 103, so as to perform various function applications and data processing of the terminal 100. The memory 103 may mainly include a program storage area and a data storage area. In addition, the memory 103 may include a high speed random access memory, and may further include a non-volatile memory, for example, at least one magnetic disk storage component, flash memory component, or another volatile solid-state storage component.

The input device 104 may be configured to receive input digital or character information and generate key signal input related to user setting and function control of the terminal 100. Specifically, the input device 104 may include a touch panel and other input devices. The touch panel, also referred to as a touchscreen, may collect a touch operation performed by the user on the touch panel or in the vicinity of the touch panel, and drive a related connection apparatus according to a preset program. The touch operation herein may be an operation performed on the touch panel or in the vicinity of the touch panel by the user by using a finger, a stylus, or any other suitable touch objects. In other words, when the touch operation is performed, the touch object may come in contact with the touchscreen or may not come in contact with the touchscreen. In addition to the touch panel, the input device 104 may further include other input devices. Specifically, the other input devices may include but are not limited to one or more of a physical keyboard, a function button (for example, a volume control button or a switch button), a track ball, a mouse, an joystick, and the like.

The output device 105 may include a display device, an audio playing device, or the like. The display device may be configured to display information input by the user, information provided to the user, and various menus of the terminal 100. The display device may include a display screen. Optionally, the display screen may be configured in a form of an LCD (Liquid Crystal Display, liquid crystal display), an OLED (Organic Light-Emitting Diode, organic light-emitting Diode), or the like. The audio playing device includes at least a loudspeaker and an audio circuit. The audio circuit may transmit an electric signal, converted from audio data that is received by the audio circuit, to the loudspeaker, and the electric signal is converted to a sound signal and then output by the loudspeaker.

The photographing device 106 may be configured to acquire an image by photographing. Using the terminal 100 being a mobile phone as an example, the photographing device may include a front-facing camera and/or a rear-facing camera. The image may include a picture or a video clip. In addition, the photographing device 104 may further include other auxiliary apparatuses, such as, a camera flash, which is not repeatedly described herein.

The parameter collecting device 107 is configured to collect parameters, where the parameters may be transmitted to the processor 101 for processing. The parameter collecting device 107 may include one or more of a positioning apparatus, an angle determining apparatus, and a sensor. Specifically, the positioning apparatus may be a GPS (Global Positioning System, global positioning system), the angle determining apparatus may include an electronic compass and an electronic gyroscope, and the sensor may include a barometric pressure sensor, a temperature sensor, and the like. For a related description, refer to the following description.

A person skilled in the art may understand that, the structure of the terminal shown in FIG. 1 is not intended to constitute a limitation on the terminal. A person of ordinary skill in the art may make appropriate modification to the structure in FIG. 1 according to a requirement, for example, delete some components, add some components, or replace some components in FIG. 1 with other components.

A person skilled in the art may understand that, the terminal in the embodiments of the present invention may perform at least steps or functions of any one of the following embodiments.

### Embodiment 1

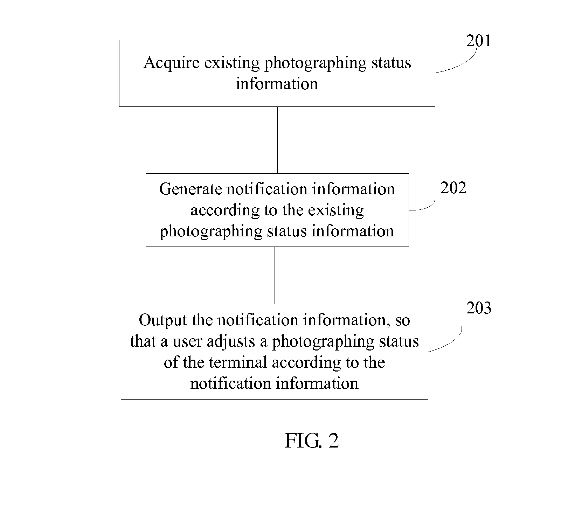

FIG. 2 is a flowchart of a method implemented by a terminal according to an embodiment of the present invention. A person skilled in the art may understand that, methods described in this embodiment and other following embodiments of the present invention include multiple operations that occur in a specific sequence, but these methods may include more or less operations, and these operations may be performed sequentially or concurrently, where these sequences are not strict sequences.

Referring to FIG. 2, the information processing method includes:
Step 201: Acquire existing photographing status information.

In this embodiment of the present invention, photographing status information may include at least one of photographing status information of the terminal and additional status information. The photographing status information of the terminal may include at least one of a location parameter and an angle parameter. Further, in addition to the location parameter and/or the angle parameter, the photographing status information of the terminal may further include at least one of a height parameter and a focal length parameter. The additional status information may include at least one of photographing time information and weather information.

In this embodiment of the present invention, the terminal may acquire the existing photographing status information from different devices. For example, the terminal may locally acquire the existing photographing status information. For example, if the existing photographing status information is stored in a memory 103 of the terminal, a processor 101 of the terminal may acquire the existing photographing status information from the memory 103. In this embodiment of the present invention, the existing photographing status information may be corresponding to an object that is currently photographed by a user. For example, the user once photographed a building B1 and obtained an image 1, and the user wants to photograph the building B1 again and obtains an image 2. To achieve that the image 2 that is obtained by photographing again has same or roughly similar composition as the image 1, the terminal may acquire photographing status information of the image 1 and use the photographing status information of the image 1 as the existing photographing status information for reference, for example, the photographing status information used when the user photographed the image 1 is used for reference. Certainly, the image 1 may further be an image of another building that is similar to the foregoing building B1 or an image of an object B2. Photographing status information used when another object is photographed may also be used as the existing photographing status information in this embodiment of the present invention as long as the photographing status information can be used as reference for photographing the building B1.

Optionally, the user may further acquire the existing photographing status information from a network device or another terminal. For example, the user may save the existing photographing status information on the network device or the another terminal in advance. The network device may be a cloud server. When shooting a photo, the terminal may acquire the existing photographing status information from the network device or the another terminal by using a wireless communications technology.

The foregoing existing photographing status information, which are stored locally, or on the network device or the another terminal, may be generated by a terminal that is currently used by the user, or may be generated by another terminal. For example, the existing photographing status information may be photographing status information used when the image 1 is photographed by another terminal. For example, if the user does not know how to photograph the building B1 to acquire a better image, the user may acquire the existing photographing status information from the network side by using the communications technology and use the existing photographing status information for reference. The existing photographing status information may be photographing status information of another terminal and/or additional status information used when the building B1 or a similar building is photographed by another professional photographer. Certainly, the terminal may also receive existing photographing status information that is actively pushed by the network device, for example, when the user arrives at a scenic area, the terminal may receive existing photographing status information, which is actively pushed by a server, of a scenic spot in the scenic area, where the existing photographing status information of the scenic spot may be photographing status information used when the scenic spot is photographed by another professional photographer. Understandably, the terminal may also acquire the existing photographing status information in another manner, such as blue-tooth or WIFI, which is not repeatedly described herein.

The existing photographing status information may be stored in an image, or may be stored in a file associated with an image. Correspondingly, the terminal acquires the existing photographing status information from the image or the file associated with the image. Specifically, a field may be added based on an encoding format of the image, and the newly added field is used to store the existing photographing status information. Alternatively, a file with a recording function (for example, a txt file) may be associated with the image, and the existing photographing status information is stored in the file. The foregoing association may be implemented in a manner of creating a correspondence, or the like. Preferably, the image may include but is not limited to a photo, a picture, a video clip, and the like.

When the existing photographing status information is stored in the image or the file associated with the image, the acquiring existing photographing status information may include:
a. Acquire an existing image. The existing image is an image previously obtained by photographing by the terminal or another terminal. Further, the acquiring an existing image may be acquiring according to a selection of the user or may be actively acquiring according to a current location parameter of the terminal. Related descriptions are described in the following embodiments.
b. Acquire photographing status information corresponding to the existing image. Specifically, the photographing status information may be acquired from the existing image, or the photographing status information may be acquired from a file associated with the image; where the photographing status information is stored in the existing image or the associated file that is associated with the existing image. The photographing status information may include at least one of photographing status information of the terminal or of another terminal when the existing image is photographed, and additional status information when the existing image is photographed.
c. Use the photographing status information corresponding to the existing image as the existing photographing status information.

In conclusion, after acquiring the existing photographing status information, the terminal is ready for a next step of generating notification information.

Step 202: Generate notification information according to the existing photographing status information.

Specifically, the notification information includes the existing photographing status information.

Alternatively, before the notification information is generated, current photographing status information is first acquired, and the generating notification information according to the existing photographing status information includes: generating the notification information according to the existing photographing status information and the current photographing status information, where the notification information includes a deviation between the current photographing status information and the existing photographing status information. Step 203: Output the notification information, so that a user adjusts a photographing status of the terminal according to the notification information.

Specifically, the terminal may output the notification information in a voice manner, in a display interface manner, or in another manner, so as to help the user adjust the photographing status of the terminal according to the notification information.

If the notification information includes the existing photographing status information, the user may adjust the photographing status of the terminal by referring to the existing photographing status information. For example, if the existing photographing status information of the terminal includes the angle parameter and the location parameter (hereinafter referred to as existing angle parameter and existing location parameter), the user may adjust a current photographing angle and photographing location of the terminal, so as to make the current photographing angle and photographing location approximate the existing angle parameter and the existing location parameter. For another example, if the existing additional status information includes time (hereinafter referred to as existing time), the user may adjust the current photographing time to approximate the existing time. For example, if the current time is 8:00 a.m. and a time parameter in the existing additional status information is 5:00 p.m., the user may wait until 5:00 p.m. to take the photo.

The notification information includes a deviation between the current photographing status information and the existing photographing status information, and therefore, the user may adjust the photographing status of the terminal by referring to the deviation. For example, a height parameter in the current photographing status information of the terminal is 1.3 meters, a height parameter in the existing photographing status information of the terminal is 1.7 meters, and therefore, the deviation is 0.4 meters. Then, the user may increase the height of the terminal by 0.4 meters; for another example, a time parameter in current additional status information is 16:00, a time parameter in the existing additional status information is 16:30, and the deviation is 30 minutes. Therefore, the user may wait for 30 minutes before taking the photo.

If the user takes the photo after adjusting the photographing status of the terminal according to the foregoing notification information, a better photographing result may be acquired. For example, composition same or roughly same as that of an image previously photographed may be obtained easily and quickly.

In addition, this embodiment of the present invention shows two exemplary application scenarios: a user or another user once photographed a photographing object, and the user wants to photograph the photographing object again with roughly same composition, or a user wants to obtain a better photographing result in a place by referring to existing information. However, the application of this embodiment of the present invention is not limited to the two application scenarios. For example, the user previously photographed a cluster of old buildings in an area, and at a second time of photographing, the cluster of old buildings in the area is replaced by a cluster of new buildings; in this case, if the area is photographed with roughly same composition for comparison, this embodiment of the present invention is also applicable. For another example, the user may photograph a growth course of a child under a same photographing background (for example, photograph the child in different ages before an apartment in which the child lives), and this embodiment of the present invention is also applicable. Further, if the user wants to make the posture of the child in the photographed image roughly the same or make the child in a roughly same location with respect to a photographed background, the terminal may further display the previous photographed image on a display interface, so as to help the user determine that the child is in a roughly same posture or the child is in a roughly same location with respect to the photographed background.

In this embodiment of the present invention, before a user photographs an object by using a terminal, the terminal first acquires existing photographing status information, then generates notification information according to the acquired existing photographing status information, and finally outputs the generated notification information; in this way, the user can easily and efficiently adjust a photographing status according to the notification information and acquires a better photographing result.

### Embodiment 2

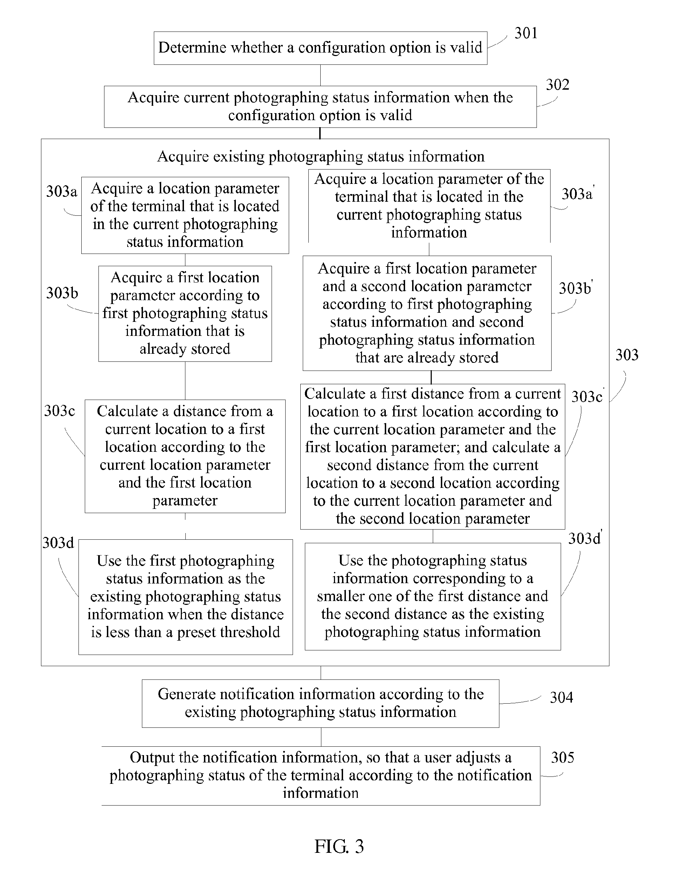

FIG. 3 is a flowchart of a method implemented by a terminal according to another embodiment of the present invention. It should be noted that content of this embodiment that is the same as or similar to that of Embodiment 1 is not repeatedly described in this embodiment of the present invention, and reference is made to descriptions of Embodiment 1. Step 301: Determine whether a configuration option is valid.

The terminal may determine, according to a selection instruction of a user, whether the configuration option is valid. For example, the terminal may provide a mode, such as, a "photographing assist mode", and when the user enables the "photographing assist mode", it is determined that the configuration option is valid, for example, the configuration option is set to 1; on the contrary, when the user disables the "photographing assist mode", it is determined that the configuration option is invalid, for example, the configuration option is set to 0. Certainly, the configuration option may also be set as valid or the like by default in factory settings, which is not limited by this embodiment of the present invention.

Step 302: Acquire current photographing status information when the configuration option is valid.

Step 303: Acquire existing photographing status information.

The photographing status information (the current photographing status information or the existing photographing status information) may include at least one of photographing status information of the terminal and additional status information.

The photographing status information of the terminal may include but is not limited to a location parameter, an angle parameter, a height parameter, and a focal length parameter. The following describes meanings of the four parameters:
The photographing location parameter is used to represent a location at which the terminal takes a photo. The photographing location parameter may be acquired by a positioning apparatus on the terminal. For example, longitude and latitude at which the terminal takes the photo are acquired by using GPS (Global Positioning System, global positioning system), and are used as the photographing location parameter. The foregoing photographing location parameter may be indicated by Location (X, Y), where Location represents a photographing location, X represents longitude, and Y represents latitude.

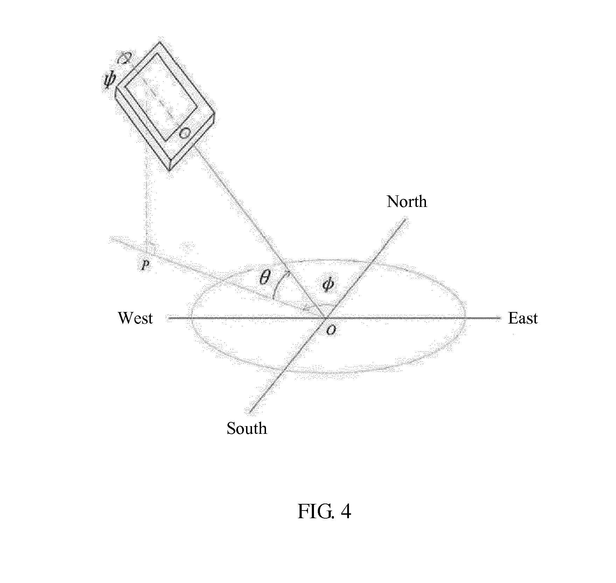

The photographing angle parameter is used to represent a photographing angle (which is also referred to as a photographing posture) at which the terminal takes the photo, where the photographing angle parameter may be indicated by Rotation (θ, ϕ, ψ), where Rotation represents the photographing angle, and θ, ϕ, and ψ represent three rotation angles. For details, refer to FIG. 4, where FIG. 4 shows a schematic diagram of the foregoing three rotation angles of the terminal.

θ is an included angle between an extended line of a longitudinal connection line (or a longitudinal axis) of the terminal and a horizontal plane, ϕ is an included angle between the projected line OP, on the horizontal plane, of the extended line of the longitudinal connection line and the magnetic north pole, and ψ is a rotation angle by which the terminal rotates the longitudinal connection line. According to this embodiment of the present invention, the foregoing three rotation angles may be jointly determined by angle determining apparatuses, for example, an electronic compass and an electronic gyroscope, on the terminal. Specifically, the electronic compass may be used to determine a direction of the magnetic north pole, and the electronic gyroscope can measure the foregoing three rotation angles θ, ϕ, and ψ of the terminal.

The photographing height parameter is used to represent a height at which the terminal takes the photo. The photographing height parameter may be acquired by a height sensor on the terminal. For example, a distance, measured by a barometric pressure sensor, from the terminal to the sea level may be used as a height for photographing. The photographing height parameter may be represented as H.

The photographing focal length parameter is used to represent a focal length by which the terminal takes the photo, and may be directly read from the terminal. Using a digital camera as an example, the focal length parameter may be read from a register applied to the camera. The photographing focal length parameter may be represented as F.

It is better that all the four parameters are acquired for the photographing status information. However, it is also acceptable that some of the four parameters are acquired, a specific reason of which is described in detail later.

The additional status information may include but is not limited to at least one of photographing time information and weather information. The photographing time may be a season, or may specifically be a month, or may specifically be a.m. or p.m. of a day, or even be a specific time point, or the like. The weather information may be sunny, rainy, snowy, or the like.

Because in this embodiment of the present invention, the user enables the "photographing assist mode", the terminal may actively acquire the existing photographing status information. The following describes how the terminal actively acquires the existing photographing status information.

### Manner 1:

Step 303a: Acquire a location parameter of the terminal that is in the current photographing status information (hereinafter referred to as a current location parameter). For example, the current location parameter of the terminal may be learned by using the positioning apparatus on the terminal, and the processor 101 may read the location parameter.

Step 303b: Acquire a first location parameter according to first photographing status information that is already stored, where the first photographing status information includes the first location parameter. Using the memory 103 of the terminal as an example, the memory 103 stores the first photographing status information, for example, the terminal may store the first photographing status information by using a first image that is stored, and the first photographing status information includes the first location parameter.

Step 303c: Calculate a distance from a current location to a first location according to the current location parameter and the first location parameter. A specific algorithm belongs to the prior art, which is not repeatedly described in the present invention.

Step 303d: Use the first photographing status information as the existing photographing status information when the distance is less than a preset threshold. The preset threshold may be entered and determined by the user, or may be selected by the user in configuration options before delivery, or the like. For example, assume that the preset threshold is 100 meters, if the current location of the terminal is at "the east gate of the Summer Palace", first photographing status information corresponding to a first location within 100 meters away from "the east gate of the Summer Palace" may be used as the existing photographing status information.

It may be understood by a person skilled in the art that 303a and 303b are not in a strict sequence, and in addition, the first photographing status information and the first location are only for ease of understanding, and 303a to 303d may be performed repeatedly until all existing photographing status information that meets the forgoing conditions are acquired. If multiple pieces of photographing status information meet the foregoing conditions, the user may make a selection.

### Manner 2:

Step 303a': Acquire a location parameter of the terminal that is in the current photographing status information (hereinafter referred to as a current location parameter).

Step 303b': Acquire a first location parameter and a second location parameter according to first photographing status information and second photographing status information that are already stored, where the first photographing status information and the second photographing status information include the first location parameter and the second location parameter, respectively.

Step 303c': Calculate a first distance from a current location to a first location according to the current location parameter and the first location parameter; and calculate a second distance from the current location to a second location according to the current location parameter and the second location parameter.

Step 303d': Use photographing status information corresponding to a smaller one of the first distance and the second distance as the existing photographing status information. For example:
when the first distance is less than the second distance, the first photographing status information is used as the existing photographing status information; or
when the first distance is greater than the second distance, the second photographing status information is used as the existing photographing status information.

It should be noted that, when the first distance is equal to the second distance, either the first photographing status information or the second photographing status information may be used as the existing photographing status information, which is not limited by the present invention.

For example, the current location of the terminal is at "the east gate of the Summer Palace", and if the first location is within 100 meters away from "the east gate of the Summer Palace" and the second distance is 300 meters away from "the east gate of the Summer Palace", the first photographing status information corresponding to the first location may be used as the existing photographing status information.

Preferably, a preset threshold may be added and used as a condition for determining the existing photographing status information. That is, the smaller one of the first distance and the second distant must further be less than the preset threshold. For example:
when the first distance is less than the second distance, and the first distance is less than the preset threshold, the first photographing status information is used as the existing photographing status information; or
when the first distance is greater than the second distance, and the second distance is less than the preset threshold, the second photographing status information is used as the existing photographing status information.

For example, the preset threshold is 100 meters, the first location is 1000 meters away from "the east gate of the Summer Palace", and the second location is 3000 meters away from the "east gate of the Summer Palace". Although the first distance from the first location to the "east gate of the Summer Palace" is smaller, the corresponding first photographing status information is not used as the existing photographing status information, because the first distance 1000 meters is not less than the preset threshold 100 meters.

It may be learned from the foregoing description that, this embodiment of the present invention may involve a comparison between the first distance and the second distance, or may involve a comparison between the first distance or the second distance and the preset threshold. It may be understood by a person skilled in the art that, these comparisons may not be performed in a sequence. For example, the first distance and the second distance may be first compared separately with the threshold. When both the first distance and the second distance are less than the preset threshold, the first distance is then compared with the second distance.

Similarly, a person skilled in the art may understand that, 303a' and 303b' are not in a strict sequence. In addition, 303a' to 303d' may be performed repeatedly.

Optionally, if there are multiple pieces of acquired existing photographing status information that meet the foregoing conditions, for example, there are multiple images within the preset threshold, the terminal may notify the user of making a selection, and the terminal determines an existing image according to the selection of the user, so as to determine photographing status information corresponding to the image.

Step 304: Generate notification information according to the existing photographing status information.

Step 305: Output the notification information, so as to enable a user to adjust a photographing status of the terminal according to the notification information.

Specifically, manners of outputting the notification information may include:
displaying the existing photographing status information and the current photographing status information; or
displaying a deviation between the existing photographing status information and the current photographing status information.

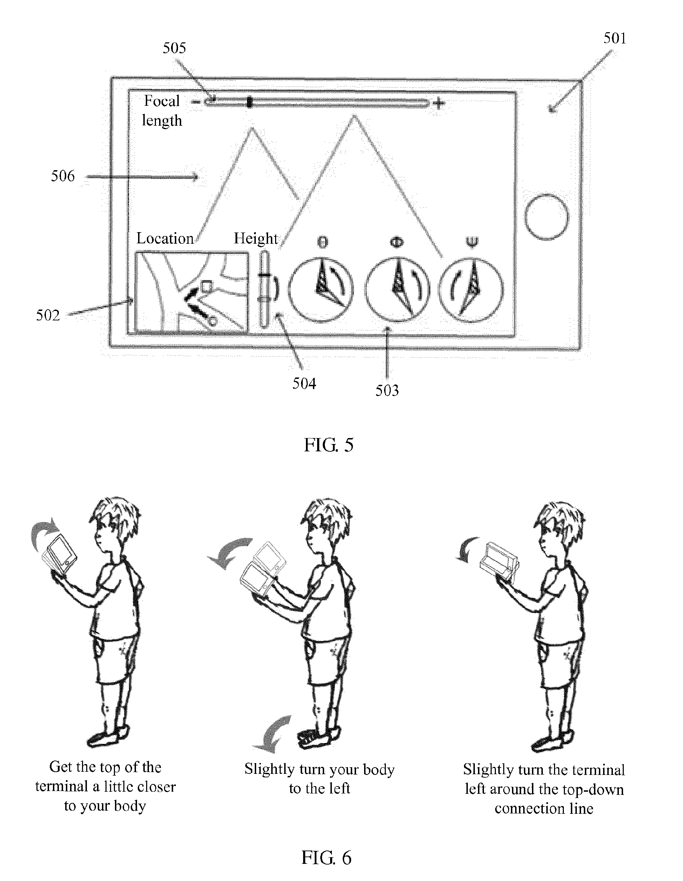

Assume that both the current photographing status information and the existing photographing status information include four parameters: a location parameter, an angle parameter, a height parameter, and a focal length parameter; when the terminal displays the existing photographing status information and the current photographing status information, the foregoing four parameters in the existing photographing status information may be used as a reference to prompt the user to adjust the foregoing four parameters in the current photographing status information, so that the foregoing four parameters in the current photographing status information approximate the foregoing four parameters in the existing photographing status information respectively. Understandably, it is ideal that the foregoing four parameters in the current photographing status information are equal to the foregoing four parameters in the existing photographing status information; however, preferably, a preset threshold may be preset, and when the foregoing four parameters in the current photographing status information approximate the four parameters in the existing photographing status information up to the preset threshold, it may be considered that the foregoing four parameters in the current photographing status information are equal to the foregoing four parameters in the existing photographing status information. For example, a current height parameter approximates an existing height parameter up to 95%, the current location parameter approximates an existing location parameter up to 95%, and the like. It should be noted that a preset threshold may be a percentage, or may be an absolute value of a difference between corresponding parameters, or the like. In addition, a preset threshold may be preset according to an actual situation, and is not limited to a specific value in this embodiment of the present invention; and preset thresholds may be different, for example, a current height parameter approximates an existing height parameter up to 96%, a current location parameter approximates an existing location parameter up to 95%, or the like. Further, FIG. 5 shows a schematic diagram of displaying on a display interface after notification information is output by a terminal; obviously, this is not intended to limit the notification information, for example, a manner of voice notification, a manner of combining the display interface and the voice notification, or the like, may further be used.

It may be learned with reference to FIG. 5 that, content displayed in the display interface may include existing photographing status information and current photographing status information that are acquired by a terminal 501, and an advice on adjusting the current photographing status information is provided based on the existing photographing status information. For example, an area 502 of the display interface shows an advice on adjusting a current location, where a small circle represents the current location of the terminal, a small square represents an existing location, and an arrow represents a moving direction of the current location of the terminal. Optionally, a guiding advice, such as, "Move left 10 meters " or "Move forward 12 meters", may further be displayed in the area 502.

An area 503 of the display interface shows an advice on adjusting an angle of the terminal. From left to right are θ, ϕ, and ψ, successively, and the arrow indicates a specific adjusting advice. To make a user easily understand the three rotation angles, optionally, the terminal may further display meanings of adjusting the three rotation angles according to an arrow indication. Referring to FIG. 6, FIG. 6 shows a schematic diagram of adjusting the three rotation angles as indicated by the arrows in the area 503 in the display interface. Preferably, the area may further display a guiding advice, such as, "Get the top of the terminal a little closer to your body", or "Slightly turn your body to the left", or "Slightly turn the terminal left around the top-down connection line", or the like.

Similarly, an area 504 shows an advice on adjusting a height of the terminal, and an area 505 shows an advice on adjusting a focal length of the terminal. Similarly, the foregoing areas may display a guiding advice.

Further, the terminal may further play a guiding advice in a voice manner, for ease of adjustment by the user.

The display interface may display by using the display screen of the terminal. Optionally, the display interface may further display an existing image acquired by the terminal, for example, in an area 506 that is located in the center of the display interface, for the user's reference.

A person skilled in the art may understand that, 303 and 303 are not in a strict sequence.

In addition, in the examples provided above, both the existing photographing status information and the current photographing status information include four parameters: a location parameter, an angle parameter, a height parameter, and a focal length parameter. It is better that the terminal acquires all of the four parameters; in this way, when the user performs an adjustment operation, the adjustment is more efficient and accurate. However, it is also acceptable that only some of the four parameters are acquired.

Generally, it is relatively difficult for the user to adjust angles of the terminal, because the angles include three rotation angles. If the user can acquire an adjusting advice from the terminal, it is helpful to improve efficiency, and therefore, the terminal may acquire the angle parameter and provide corresponding notification information. Certainly, it is not easy for the user to adjust a location of the terminal, because an adjustment range (for example, a moving distance) may be relatively great. If the user can acquire an adjusting advice, it is also helpful. Therefore, the terminal many acquire the location parameter and provide corresponding notification information. On the other hand, a user is generally in a standing posture and gets used to lifting a terminal to a height roughly the same as a height of eyes when the user takes a photo, and therefore, an up-down adjustment range is relatively small, and the user can find an appropriate height more easily. In addition, in many cases, when the user takes a photo, the user gets used to using a focal length that is obtained after the terminal focuses automatically; therefore, the user does not need to consider the focal length too much. In conclusion, the existing photographing status information acquired by the terminal may include at least one of location parameter and angle parameter that are used when the photographing object is photographed previously. Further, to improve efficiency of the photographing, the existing photographing status information acquired by the terminal may further include at least one of a height parameter and a focal length parameter that are used when the photographing object is photographed previously.

It may be learned from the foregoing descriptions that, when a user photographs an photographing object by using a terminal, the terminal determines whether a configuration option is valid before the terminal acquires existing photographing status information; when the configuration option is valid, the existing photographing status information is acquired, and the user is prompted, according to the photographing status information, to adjust a photographing status of the terminal. Because the terminal provides notification information, the user can adjust the photographing status according to the notification information and acquire a better photographing result. Further, the configuration option is set, and a function of guiding the user to adjust the photographing status of the terminal is enabled only when the configuration option is valid, which improves user experience. Because the existing photographing status information can be actively acquired by using a location parameter, efficiency is improved.

### Embodiment 3

The following describes, by using an example, a process of photographing by a terminal by using an information processing method provided in an embodiment of the present invention. Assume that a user wants to photograph the Tian An Men Rostrum in winter so as to compare the Tian An Men Rostrum photographed in spring, and for content same or similar as that in Embodiment 1 and Embodiment 2, refer to Embodiment 1 and Embodiment 2, and details are not repeatedly described herein.

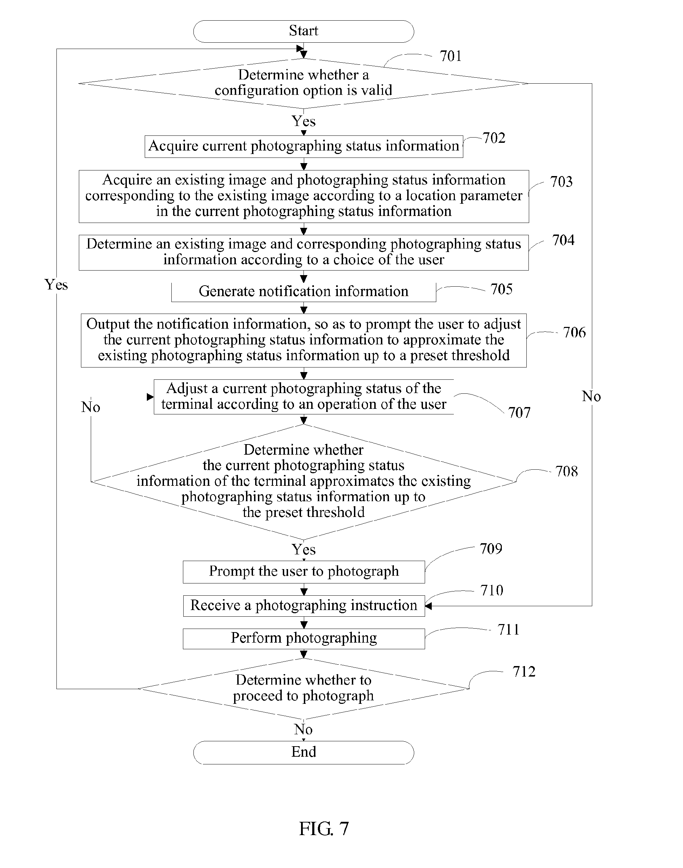

Referring to FIG. 7, the process includes:
Step 701: Determine whether a configuration option is valid.

If a result of the determining is yes, perform 702; otherwise, perform step 710.

Specifically, the terminal may determine whether the user selects an "assist photographing mode". If the user selects the "assist photographing mode", the terminal may determine that the configuration option is valid and perform step 702; otherwise, perform step 710.

Step 702: Acquire current photographing status information.

Photographing status information may include at least one of photographing status information of the terminal and additional status information. However, in view of an application scenario of this embodiment of the embodiment, the additional status information does not need to be considered, and only the photographing status information of the terminal needs to be considered. Specifically, the terminal may acquire the current photographing status information of the terminal, which may include a location parameter, an angle parameter, a height parameter, and a focal length parameter.

Step 703: Acquire an existing image and photographing status information corresponding to the existing image according to a location parameter in the current photographing status information.

That existing photographing status information is located in an image is used as an example for description in this embodiment of the present invention. For details about the acquiring an existing image and photographing status information corresponding to the existing image according to a location parameter in the current photographing status information, refer to content in Embodiment 2. For example, one of acquiring manners may include:
acquiring the location parameter of the terminal that is in the current photographing status information (hereinafter referred to as a current location parameter);
acquiring a first location parameter according to first photographing status information that is already stored in the terminal, where the first photographing status information is located in a first image, and the first photographing status information includes the first location parameter;
calculating a distance from a current location to a first location according to the current location parameter and the first location parameter;
using the first image as the existing image and the first photographing status information as the existing photographing status information when the distance is less than a preset threshold. In this way, the terminal may acquire a corresponding existing image of the Tian An Men Rostrum photographed in the spring and photographing status information that is stored in the image and is used when the Tian An Men Rostrum is photographed in the spring.

The foregoing is only an example of one of the acquiring manners, and other acquiring manners are not described herein.

Step 704: Determine an existing image and corresponding photographing status information according to a selection of the user.

In step 703, there may be one or more existing images of the Tian An Men Rostrum photographed in the spring and acquired by the terminal, the terminal may display the one or more acquired images of the Tian An Men Rostrum photographed in the spring for the user to make a selection, and may determine the existing photographing status information according to the selection of the user.

Step 705: Generate notification information.

Preferably, the terminal may generate the notification information according to a deviation between the current photographing status information and the existing photographing status information.

Step 706: Output the notification information, so as to prompt the user to adjust the current photographing status information to approximate the existing photographing status information up to a preset threshold.

Step 707: Adjust a current photographing status of the terminal according to an operation of the user.

Step 708: Determine whether the current photographing status information of the terminal approximates the existing photographing status information up to the preset threshold.

If a result of the determining is yes, perform step 709; otherwise, perform step 707; if the current photographing status information of the terminal approximates the photographing status information of the Tian An Men Rostrum photographed in the spring, it indicates that roughly same composition is acquired and the terminal may perform step 709 to prompt the user that a photo can be taken; otherwise, it indicates that roughly same composition is not acquired by the terminal, the terminal continues to repeat step 707.

Step 709: Prompt the user to photograph.

Step 710: Receive a photographing instruction.

Step 711: Perform photographing.

The terminal photographs the Tian An Men Rostrum according to the photographing status information adjusted by the user.

Step 712: Determine whether to proceed to photograph.

If a result of the determining is yes, perform step 701; otherwise, end the process.

Optionally, for the image acquired by the photographing of step 711, the photographing status information, of the terminal, used during the photographing may be stored in the image or an associated file associated with the image, for future reference.

It may be learned from the foregoing descriptions that, when a user photographs an photographing object by using a terminal, the terminal determines whether a configuration option is valid before the terminal acquires existing photographing status information; when the configuration option is valid, the existing photographing status information is acquired, and the user is prompted, according to the photographing status information, to adjust a photographing status of the terminal. Because the terminal provides notification information, the user can adjust the photographing status according to the notification information and acquire a better photographing result. Further, the configuration option is set, and a function of guiding the user to adjust the photographing status of the terminal is enabled only when the configuration option is valid, which improves user experience. Because the existing photographing status information can be acquired actively by using a location parameter, efficiency is improved.

Assume that the user visits the Summer Palace, and when arriving at a gate of the Summer Palace, the user receives a message pushed by a server, where various photographing status information of main scenic spots are included, for example, photographing status information of the Kunming Lake, and the like are included. In this way, when the user arrives at the Kunming Lake, the terminal acquires the received photographing status information of the Kunming Lake according to a location parameter of the Kunming Lake, then generates notification information, and prompts the user to adjust the photographing status of the terminal, so as to acquire a better photographing result. Related descriptions are not repeatedly described herein, and refer to the foregoing descriptions.

### Embodiment 4

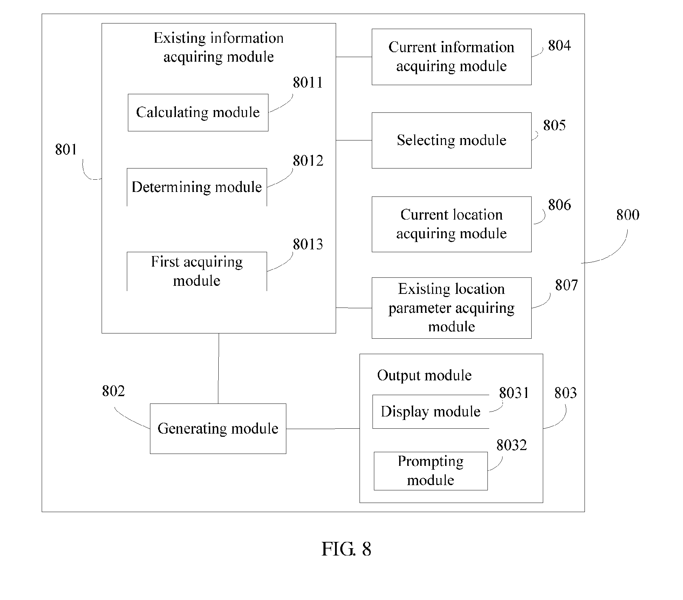

Referring to FIG. 8, this embodiment of the present invention provides an information processing apparatus 800 applied to a terminal, where the information processing apparatus 800 is corresponding to related content of the foregoing Embodiment 1 to Embodiment 3, and the described content is not repeatedly described herein. Obviously, an operating process and principle of the apparatus 800 is the same as the operating process and principle of the foregoing Embodiment 1 to Embodiment 3, and as an integrated invention embodiment, Embodiment 4 may be described with reference to the descriptions of Embodiment 1 to Embodiment 3.

The information processing apparatus 800 includes:
an existing information acquiring module 801, configured to acquire existing photographing status information;
a generating module 802, configured to generate notification information according to the existing photographing status information; and an output module 803, configured to output the notification information, so that a user adjusts a photographing status of the terminal according to the notification information.

Optionally, the notification information includes the existing photographing status information.

Optionally, the apparatus 800 further includes: a current information acquiring module 804; where the current information acquiring module 804 is configured to: acquire current photographing status information before the notification information is generated.

The generating module 802 specifically configured to: generate the notification information according to the existing photographing status information and the current photographing status information, where the notification information includes a deviation between the current photographing status information and the existing photographing status information. Optionally, the photographing status information includes at least one of photographing status information of the terminal and additional status information.

Optionally, the photographing status information of the terminal includes at least one of a location parameter and an angle parameter.

Optionally, the photographing status information of the terminal further includes at least one of a height parameter and a focal length parameter.

Optionally, the additional status information includes at least one of photographing time information and weather information.

Optionally, the apparatus 800 further includes: a selecting module 805, configured to receive a selection of the user before the existing photographing status information is acquired; and the existing information acquiring module 801 is specifically configured to acquire the existing photographing status information according to the selection of the user received by the selecting module 805.

Optionally, the apparatus 800 further includes: a current location acquiring module 806, configured to acquire a current location parameter of the terminal before the existing photographing status information is acquired.

The existing information acquiring module 801 is specifically configured to acquire the existing photographing status information according to the current location parameter acquired by the location acquiring module.

Optionally, the apparatus 800 further includes an existing location parameter acquiring module 807, configured to, before the existing photographing status information is acquired, acquire a first location parameter according to first photographing status information that is already stored, where the first photographing status information includes the first location parameter.

The existing information acquiring module 801 specifically includes a calculating module 8011 and a determining module 8012.

The calculating module 8011 is configured to calculate a distance from the current location to a first location according to the current location parameter and the first location parameter. The determining module 8012 is configured to use the first photographing status information as the existing photographing status information when the distance is less than a preset threshold.

Optionally, the apparatus 800 further includes an existing location parameter acquiring module 807, configured to, before the existing photographing status information is acquired, acquire a first location parameter and a second location parameter according to first photographing status information and second photographing status information that are already stored, where the first photographing status information and the second photographing status information include the first location parameter and the second location parameter respectively.

The existing information acquiring module 801 specifically includes a calculating module 8011 and a determining module 8012.

The calculating module 8011 is configured to calculate a first distance from the current location to a first location according to the current location parameter and the first location parameter, and a second distance from the current location to a second location according to the current location parameter and the second location parameter.

The determining module 8012 is configured to use photographing status information corresponding to a smaller one of the first distance and the second distance as the existing photographing status information.

Optionally, the apparatus 800 further includes an existing location parameter acquiring module 807, configured to, before the existing photographing status information is acquired, acquire a first location parameter according to first photographing status information that is already stored, where the first photographing status information includes the first location parameter.

The existing information acquiring module 801 specifically includes a calculating module 8011, a first acquiring module 8013 and a determining module 8012.

The calculating module 8011 is configured to calculate a distance from the current location to a first location according to the current location parameter and the first location parameter. The first acquiring module 8013 is configured to acquire the first photographing status information with the distance less than a preset threshold.

The determining module 8012 is configured to, according to a selection of the user, use the first photographing status information, with the distance less than the preset threshold and selected by the user, as the existing photographing status information.

Optionally, the existing photographing status information is received from another device.

Optionally, the existing photographing status information is in an image.

Alternatively, the existing photographing status information is located in a file associated with an image.

In this embodiment of the present invention, before a terminal photographs a photographing object, first, an information acquiring module acquires existing photographing status information, then a generating module generates notification information according to the acquired existing photographing status information, and finally an output module outputs the generated notification information. In this way, a user can adjust a photographing status according to the notification information. Therefore, because the user can obtain the notification information output by the terminal, the notification information can help the user acquire a better photographing result.

Optionally, the output module 803 specifically includes: a display module 8031 and a prompting module 8032.

The display module 8031 is configured to display the existing photographing status information and the current photographing status information.

The prompting module 8032 is configured to prompt, by using the acquired existing photographing status information as a reference, the user to adjust the current photographing status information to approximate the existing photographing status information up to another preset threshold.

In this embodiment of the present invention, before a user photographs a photographing object by using a terminal, the terminal first acquires existing photographing status information, then generates notification information according to the acquired existing photographing status information, and finally outputs the generated notification information; in this way, the user can easily and efficiently adjust a photographing status according the notification information.

A persons of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM). In short, the foregoing descriptions are merely exemplary embodiments of the present invention, but are not intended to limit the protection scope of the present invention. Any modification, equivalent replacement, or improvement made without departing from the spirit and principle of the present invention shall fall within the protection scope of the present invention.

## Claims

1. An information processing method applied to a terminal, wherein the method comprises:
acquiring existing photographing status information;
generating notification information according to the existing photographing status information; and
outputting the notification information, so that a user adjusts a photographing status of the terminal according to the notification information.

2. The information processing method according to claim 1, wherein the notification information comprises: the existing photographing status information.

3. The information processing method according to claim 1, wherein before the generating notification information, the method further comprises: acquiring current photographing status information; and
the generating notification information according to the existing photographing status information comprises: generating the notification information according to the existing photographing status information and the current photographing status information, wherein the notification information comprises a deviation between the current photographing status information and the existing photographing status information.

4. The information processing method according to any one of claims 1 to 3, wherein the photographing status information comprises at least one of photographing status information of the terminal and additional status information.

5. The information processing method according to claim 4, wherein the photographing status information of the terminal comprises at least one of a location parameter and an angle parameter.

6. The information processing method according to claim 5, wherein the photographing status information of the terminal further comprises at least one of a height parameter and a focal length parameter.

7. The information processing method according to any one of claims 4 to 6, wherein the additional status information comprises at least one of photographing time information and weather information.

8. The information processing method according to any one of claims 1 to 7, wherein before the acquiring existing photographing status information, the method further comprises receiving a selection of the user; and
the acquiring existing photographing status information comprises: acquiring the existing photographing status information according to the selection of the user.

9. The information processing method according to any one of claims 5 to 7, wherein before the acquiring existing photographing status information, the method further comprises:
acquiring a location parameter of a current location of the terminal; and
the acquiring existing photographing status information comprises: acquiring the existing photographing status information according to the location parameter of the current location.

10. The information processing method according to claim 9, wherein before the acquiring existing photographing status information, the method further comprises: acquiring a first location parameter according to first photographing status information that is already stored, wherein the first photographing status information comprises the first location parameter; and
the acquiring the existing photographing status information according to the location parameter of the current location comprises:
calculating a distance from the current location to a first location according to the location parameter of the current location and the first location parameter; and
using the first photographing status information as the existing photographing status information when the distance is less than a preset threshold.

11. The information processing method according to claim 9, wherein before the acquiring existing photographing status information, the method further comprises: acquiring a first location parameter and a second location parameter according to first photographing status information and second photographing status information that are already stored, wherein the first photographing status information and the second photographing status information comprise the first location parameter and the second location parameter respectively; and
the acquiring the existing photographing status information according to the location parameter of the current location comprises:
calculating a first distance from the current location to a first location according to the location parameter of the current location and the first location parameter;
calculating a second distance from the current location to a second location according to the location parameter of the current location and the second location parameter; and
using photographing status information corresponding to a smaller one of the first distance and the second distance as the existing photographing status information.

12. The information processing method according to claim 9, wherein before the acquiring existing photographing status information, the method further comprises: acquiring a first location parameter according to first photographing status information that is already stored, wherein the first photographing status information comprises the first location parameter; and
the acquiring the existing photographing status information according to the location parameter of the current location comprises:
calculating a distance from the current location to a first location according to the location parameter of the current location and the first location parameter;
acquiring the first photographing status information with the distance less than a preset threshold; and
according to a selection of the user, using the first photographing status information, with the distance less than the preset threshold and selected by the user, as the existing photographing status information.

13. The information processing method according to any one of claims 1 to 7, wherein the existing photographing status information is received from another device.

14. The information processing method according to any one of claims 1 to 13, wherein the existing photographing status information is in an image; or
the existing photographing status information is located in a file associated with an image.

15. The information processing method according to any one of claims 3 to 14, wherein the outputting the notification information comprises:
displaying the existing photographing status information and the current photographing status information; and
prompting, by using the acquired existing photographing status information as a reference, the user to adjust the current photographing status information to approximate the existing photographing status information up to another preset threshold.

16. An information processing apparatus applied to a terminal, wherein the apparatus comprises:
an existing information acquiring module, configured to acquire existing photographing status information;
a generating module, configured to generate notification information according to the existing photographing status information; and
an output module, configured to output the notification information, so that a user adjusts a photographing status of the terminal according to the notification information.

17. The information processing apparatus according to claim 16, wherein the notification information comprises the existing photographing status information.

18. The information processing apparatus according to claim 16, wherein the apparatus further comprises: a current information acquiring module; and the current information acquiring module is configured to: acquire current photographing status information before the notification information is generated; and
the generating module is specifically configured to: generate the notification information according to the existing photographing status information and the current photographing status information, wherein the notification information comprises a deviation between the current photographing status information and the existing photographing status information.

19. The information processing apparatus according to any one of claims 16 to 18, wherein the photographing status information comprises at least one of photographing status information of the terminal and additional status information.

20. The information processing method according to claim 19, wherein the photographing status information of the terminal comprises at least one of a location parameter and an angle parameter.

21. The information processing method according to claim 20, wherein the photographing status information of the terminal further comprises at least one of a height parameter and a focal length parameter.

22. The information processing method according to any one of claims 19 to 21, wherein the additional status information comprises at least one of photographing time information and weather information.

23. The information processing apparatus according to any one of claims 13 to 22, wherein the apparatus further comprises a selecting module, configured to receive a selection of the user before the existing photographing status information is acquired; and the existing information acquiring module is specifically configured to acquire the existing photographing status information according to the selection of the user received by the selecting module.

24. The information processing apparatus according to any one of claims 20 to 22, wherein:
the apparatus further comprises: a current location acquiring module, configured to acquire a location parameter of a current location of the terminal before the existing photographing status information is acquired; and
the existing information acquiring module is specifically configured to acquire the existing photographing status information according to the location parameter that is of the current location and acquired by the location acquiring module.

25. The information processing apparatus according to claim 24, wherein the apparatus further comprises an existing location parameter acquiring module, configured to, before the existing photographing status information is acquired, acquire a first location parameter according to first photographing status information that is already stored, wherein the first photographing status information comprises the first location parameter; and
the existing information acquiring module specifically comprises a calculating module and a determining module;
the calculating module is configured to calculate a distance from the current location to a first location according to the location parameter of the current location and the first location parameter; and
the determining module is configured to use the first photographing status information as the existing photographing status information when the distance is less than a preset threshold.

26. The information processing apparatus according to claim 24, wherein the apparatus further comprises an existing location parameter acquiring module, configured to, before the existing photographing status information is acquired, acquire a first location parameter and a second location parameter according to first photographing status information and second photographing status information that are already stored, wherein the first photographing status information and the second photographing status information comprise the first location parameter and the second location parameter respectively; and
the existing information acquiring module specifically comprises a calculating module and a determining module;
the calculating module is configured to calculate: a first distance from the current location to a first location according to the location parameter of the current location and the first location parameter, and a second distance from the current location to a second location according to the location parameter of the current location and the second location parameter; and
the determining module is configured to use photographing status information corresponding to a smaller one of the first distance and the second distance as the existing photographing status information.

27. The information processing apparatus according to claim 24, wherein the apparatus further comprises an existing location parameter acquiring module, configured to, before the existing photographing status information is acquired, acquire a first location parameter according to first photographing status information that is already stored, wherein the first photographing status information comprises the first location parameter; and
the existing information acquiring module specifically comprises a calculating module, a first acquiring module and a determining module;
the calculating module is configured to calculate a distance from the current location to a first location according to the location parameter of the current location and the first location parameter;
the first acquiring module is configured to acquire the first photographing status information with the distance less than a preset threshold; and
the determining module is configured to, according to a selection of the user, use the first photographing status information, with the distance less than the preset threshold and selected by the user, as the existing photographing status information.

28. The information processing apparatus according to any one of claims 16 to 27, wherein the existing photographing status information is received from another device.

29. The information processing apparatus according to any one of claims 16 to 28, wherein:
the existing photographing status information is in an image; or
the existing photographing status information is located in a file associated with an image.

30. The information processing apparatus according to any one of claims 18 to 29, wherein the output module specifically comprises: a display module and a prompting module;
the display module is configured to display the existing photographing status information and the current photographing status information; and
the prompting module is configured to prompt, by using the acquired existing photographing status information as a reference, the user to adjust the current photographing status information to approximate the existing photographing status information up to another preset threshold.

31. A terminal, wherein the terminal comprises:
an input device and an output device;
at least one processor; and
a memory, wherein the memory is coupled with the processor;
the processor is configured to:
acquire existing photographing status information;
generate notification information according to the existing photographing status information; and
output the notification information; and
the output device is configured to present the notification information, so that a user adjusts a photographing status of the terminal according to the notification information.

32. The terminal according to claim 31, wherein the notification information comprises:
the existing photographing status information.

33. The terminal according to claim 31, wherein the terminal further comprises a parameter collecting device, configured to collect current photographing status information; and
the generating notification information according to the existing photographing status information comprises: generating the notification information according to the existing photographing status information and the current photographing status information, wherein the notification information comprises a deviation between the current photographing status information and the existing photographing status information.

34. The terminal according to any one of claims 31 to 33, wherein the photographing status information comprises at least one of photographing status information of the terminal and additional status information.

35. The terminal according to claim 34, wherein the photographing status information of the terminal comprises at least one of a location parameter and an angle parameter.

36. The terminal according to claim 35, wherein the photographing status information of the terminal further comprises at least one of a height parameter and a focal length parameter.

37. The terminal according to any one of claims 34 to 36, wherein the additional status information comprises at least one of photographing time information and weather information.

38. The terminal according to any one of claims 31 to 37, the input device is configured to receive a selection of the user; and
the acquiring existing photographing status information comprises: acquiring the existing photographing status information according to the selection of the user.

39. The terminal according to claims 35 to 37, wherein the parameter collecting device is specifically configured to collect a location parameter of a current location of the terminal; and
the acquiring existing photographing status information comprises: acquiring the existing photographing status information according to the location parameter of the current location.

40. The terminal according to claim 39, wherein the processor is further configured to:
acquire a first location parameter according to first photographing status information that is already stored, wherein the first photographing status information comprises the first location parameter; and
the acquiring the existing photographing status information according to the location parameter of the current location comprises:
calculating a distance from the current location to a first location according to the location parameter of the current location and the first location parameter; and
using the first photographing status information as the existing photographing status information when the distance is less than a preset threshold.

41. The terminal according to claim 39, wherein the processor is further configured to:
acquire a first location parameter and a second location parameter according to first photographing status information and second photographing status information that are already stored, wherein the first photographing status information and the second photographing status information comprise the first location parameter and the second location parameter respectively; and
the acquiring the existing photographing status information according to the location parameter of the current location comprises:
calculating a first distance from the current location to a first location according to the location parameter of the current location and the first location parameter;
calculating a second distance from the current location to a second location according to the location parameter of the current location and the second location parameter; and
using photographing status information corresponding to a smaller one of the first distance and the second distance as the existing photographing status information.

42. The terminal according to claim 39, wherein the processor is further configured to:
acquire a first location parameter according to first photographing status information that is already stored, wherein the first photographing status information comprises the first location parameter; and
the acquiring the existing photographing status information according to the location parameter of the current location comprises:
calculating a distance from the current location to a first location according to the location parameter of the current location and the first location parameter;
acquiring the first photographing status information with the distance less than a preset threshold; and
according to a selection of the user, using the first photographing status information, with the distance less than the preset threshold and selected by the user, as the existing photographing status information; wherein the input device is configured to receive the selection of the user.

43. The terminal according to any one of claims 31 to 37, wherein the existing photographing status information is received from another device.

44. The terminal according to any one of claims 31 to 43, wherein the existing photographing status information is in an image; or
the existing photographing status information is located in a file associated with an image.

45. The terminal according to any one of claims 33 to 44, wherein: the output device comprises a display screen, wherein
the presenting, by the output device, the notification information comprises:
displaying the existing photographing status information and the current photographing status information by using the display screen; and
prompting, by using the acquired existing photographing status information as a reference, the user to adjust the current photographing status information to approximate the existing photographing status information up to another preset threshold.
